# EUROPÄISCHE PATENTSCHRIFT

(11) **EP 0 580 126 B1**
(45) Veröffentlichungstag und Bekanntmachung des Hinweises auf die Patenterteilung: **26.02.1997**
(21) Anmeldenummer: 93111608.1
(22) Anmeldetag: 20.07.1993
(51) Int. Cl.: G01B 11/02, G01B 11/08

(54) **Verfahren und Einrichtung zum automatischen Bestimmen der Abmessungen von Druckzylindern**
Method and device for the automatic size determination of printing cylinders
Procédé et dispositif pour la détermination automatique des dimensions de cylindres imprimeurs

(30) Priorität: 22.07.1992 DE 4224253
(43) Veröffentlichungstag der Anmeldung: 26.01.1994
(73) Patentinhaber: MASCHINENFABRIK KASPAR WALTER GmbH & CO. KG, D-81379 München (DE)
(72) Erfinder: Ettelbrück, Rüdiger, Ing.grad., D-85609 Aschheim (DE)
(74) Vertreter: TER MEER - MÜLLER - STEINMEISTER & PARTNER

(56) Entgegenhaltungen:
- EP-A- 0 396 825
- EP-A- 0 402 229
- EP-A- 0 410 321
- DE-A- 2 926 679
- FR-A- 2 564 192

## Beschreibung

Die Erfindung betrifft ein Verfahren zum automatischen Bestimmen der geometrischen Abmessungen von einem vorzugsweise kontinuierlichen Bearbeitungsprozess mit mehreren Arbeitsstationen zuzuführenden Druckzylindern, die mittels einer gesteuerten Krananlage zu den einzelnen Arbeitsstationen, insbesondere und vor allem zu und innerhalb einer Galvanikanlage transportiert werden.

Vor der Bearbeitung von Druckzylindern, z.B. von Tiefdruckzylindern in Galvanikanlagen müssen neben den verfahrenstechnischen Parametern auch die Zylinderabmessungen, insbesondere die Ballenlänge und der Durchmesser in die zentrale Steueranlage eingegeben werden. Aus diesen Werten errechnet der Zentralprozessor in der Steuerung der Anlage die verschiedenen arbeitsspezifischen Parameter wie Strom, Anodenverstellung, Zylinderdrehzahl usw.

Bisher werden die Zylinderabmessungen entweder an jeder einzelnen Maschine manuell eingegeben oder, wenn es sich um eine Automatikstraße handelt, an einem Eingabetableau am Anfang der Straße, wobei eine übergeordnete Steuerung dann jeweils diese Daten über Datentransfer den einzelnen Maschinen übermittelt.

Dieses Verfahren zur manuellen Dateneingabe ist nicht nur personal- und zeitaufwendig, sondern birgt gleichzeitig die Gefahr einer Fehleingabe.

Zur automatischen Erfassung des Durchmessers von länglichen Objekten beschreibt US-3 555 288 eine optische Meßvorrichtung, bei der sich der Durchmesser aus der Strahlunterbrechung ergibt, die der Lichtstrahl einer Lichtschranke erfährt, die das Objekt senkrecht zu dessen Bewegungsrichtung abtastet. Diese Vorrichtung ist ortsfest und nur zur Erfassugn von Durchmessern geeignet.

In DE-37 31 488 A1 wird eine Vorrichtung zum genauen Positionieren einer Materialbahnvorratsrolle unter einer Einspannstelle beschrieben. Die Vorrichtung ist durch die Verwendung mehrerer Lichtschrankensysteme sehr aufwendig und nur für ortsfeste Anlagen geeignet, nicht aber für Kranbetrieb.

Schließlich beschreibt die Druckschrift DE-40 10 200 A1 eine Greifvorrichtung, die sich jedoch nur zur Bestimmung einer Abmessung, nicht aber zu einer Ermittlung mehrerer Abmessungen an einem zu vermessenden Objekt eignet.

Der Erfindung liegt die Aufgabe zugrunde. ein Verfahren anzugeben und eine Einrichtung zu schaffen, mit der sich für Druckzylinderbearbeitungen der genannten Art die Zylinderabmessungen in einfacher Weise automatisch erfassen und in die Zentralsteuerung einer entsprechenden Bearbeitungsmaschine bzw. einer Automatikstraße eingeben lassen.

Die Erfindung ist hinsichtlich des Verfahrens dadurch gekennzeichnet, daß
- ausgehend von einer festgelegten Vertikalposition über einem auf einer positionsgenau definierten Vorlage horizontal gelagerten Druckzylinder eine vertikal verfahrbare Lichtschranke so abgesenkt wird, daß die Lichtstrecke der Lichtschranke durch den vorgelegten Druckzylinder unterbrochen und anschließend bei Erreichen der unteren Horizontaltangente an den Zylindermantel wieder freigegeben wird,
- die abgesenkte Wegstrecke der Lichtschranke als aufaddierter erster Zählwert bis zum Augenblick der Wiederfreigabe der Lichtschranke erfaßt wird,
- die Wegstrecke der Lichtschrankenunterbrechung durch den Druckzylinder als zweiter Zählwert erfaßt wird, - aus der Relation von erstem zu zweitem Zählwert der Durchmesser des Druckzylinders und die tatsächliche Position der Zylinderachse bestimmt werden.
- zwei in Zylinderachsrichtung einander gegenüberstehende Klemmbacken einer Aufnahmevorrichtung für den Druckzylinder in die festgestellte Position der Zylinderachse gebracht und von festgelegten axialen Ausgangspositionen bis zum Einspannen des Druckzylinders axial verfahren werden, wobei der axiale Verschiebeweg der Klemmbacken als dritter Zählwert erfaßt und daraus die Ballenlänge des Druckzylinders bestimmt wird, und daß
- die erfaßten Druckzylinderabmessungen in die Zentralsteuerung einer entsprechenden Bearbeitungsmaschine bzw. einer Automatikstraße eingegeben werden.

Eine Einrichtung zum automatischen Bestimmen der geometrischen Abmessungen von einem Bearbeitungsprozess zuzuführenden Druckzylindern, die mittels einer gesteuerten Krananlage zu wenigstens einer Bearbeitungsstation transportiert werden, ist erfindungsgemäß gekennzeichnet durch
- eine an der Krananlage befestigte vertikal verfahrbare Lichtschranke mit einem gegenseitigem Abstand von Lichtsende- und -empfangselement, der größer ist als der größte vorkommende Druckzylinderdurchmesser,
- einen elektronischen Absolutwegaufnehmer, der den vertikalen Verschiebeweg der Lichtschranke bei deren Absenken, ausgehend von einer festgelegten oberen Startposition oberhalb eines auf einer Vorlage mit bekannter Position vorgelegten Druckzylinders bis zum Erreichen einer Endposition unterhalb des die Lichtschrankenstrecke unterbrechenden Druckzylinders, als ersten aufaddierten Zählwert erfaßt,
- einen zweiten Zähler, der, getriggert durch die vertikal verschiebbare Lichtschranke, bei deren Unterbrechung durch den Druckzylinder und deren Wiederfreigabe bei Erreichen der unteren Horizontaltangente an den Druckzylindermantel, den Durchmesser des Druckzylinders als Zwischenzählwert erfaßt,
- einen Prozessor, der aus der Relation von erstem Zählwert und Zwischenzählwert die Lage der Druckzylinderachse errechnet und einen Steuerbefehl für die auf die Zylinderachse ausgerichtete Positionierung von zwei mit der Krananlage verbundenen, horizontal gegeneinander verfahrbaren Klemmbacken bereitstellt,
- einen Wegstreckenzähler, der den horizontalen Verschiebeweg der Klemmbacken von einer festgelegten Ausgangsposition aus bis zum Erreichen einer definierten Einspannung des Druckzylinders zwischen den beiden Klemmbacken als dritten Zählwert erfaßt, woraus im Prozessor die Ballenlänge des Druckzylinders errechnet wird sowie durch
- einen Anschluß an die Zentralsteuerung einer entsprechenden Bearbeitungsmaschine bzw. einerAutomatikstraße, der die ermittelten Zylinderabmessungen überträgt.

Vorzugsweise sind die Lichtschranke und die Klemmbacken beide in einer vertikal verfahrbaren Quertrasse der Krananlage befestigt.

Vorteilhaft ist es, wenn die Lichtschranke an den freien, einander gegenüberstehenden Enden eines an der Quertrasse befestigten Schwenkbügels angebracht ist, der vorzugsweise an einer auf der Quertrasse längsverfahrbaren Haltevorrichtung befestigt ist, die gegebenenfalls auch noch in Querrichtung des zu vermessenden Zylinders verschiebbar sein kann.

Die Erfindung und vorteilhafte Einzelheiten werden nachfolgend unter Bezug auf die Zeichnung in beispielsweiser Ausführungsform näher erläutert. Es zeigen:
- **Fig. 1**:: ein Beispiel für eine Automatiklinie einer Galvanisieranlage für Druckzylinder, wobei im oberen Teil die Seitenansicht, im unteren Teil die Draufsicht und linksseitig, gekippt um 90° die Frontansicht schematisch wiedergegeben ist;
- **Fig. 2**:: die schematische Darstellung einer erfindungsgemäßen Meßeinrichtung;
- **Fig. 3**:: in sechs Einzeldarstellungen (a) bis (f) den Verfahrensablauf bei einem erfindungsgemäßen Verfahren zum Bestimmen von Druckzylinderabmessungen, und
- **Fig. 4**:: ein Flußdiagramm zur weiteren Verdeutlichung des anhand der Fig. 3 dargestellten Verfahrensablaufs.

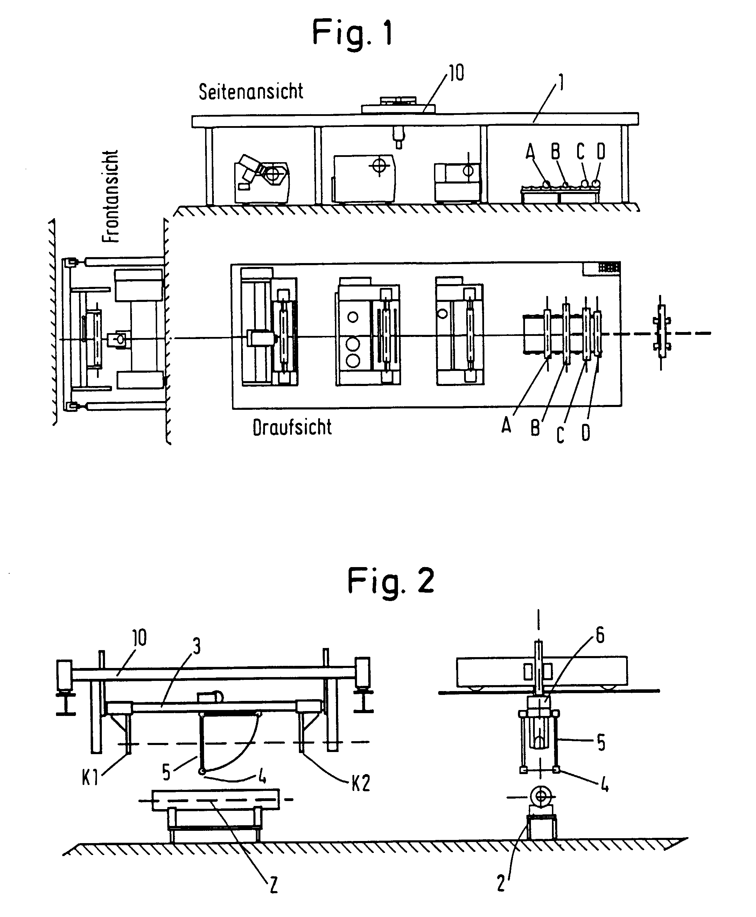

Die Fig. 1 zeigt eine im Prinzip bekannte Automatiklinie einer Galvanisieranlage für Tiefdruckzylinder. Die einzelnen Bearbeitungsstationen werden durch eine Portal-Krananlage 1 überbrückt, deren Laufkran 10 dazu dient, eine Mehrzahl von auf einem Lagergestell vorgelegten Druckzylindern A, B, C und D mit unterschiedlichen Zylinderabmessungen von einer zur nächsten Bearbeitungsstation zu transportieren. Die Krananlage 1 ist im Zusammenhang der Erfindung insoweit von Interesse als sie vorteilhaft als Trägereinrichtung für die erfindungsgemäße Meßeinrichtung verwendet wird.

Wie bereits die obige Erfindungsdefinition erkennen läßt, besteht die erfindungsgemäße Lösung im Messen der Zylinderabmessungen mittels definiert verfahrbarer Lichtschranke und digitaler Zähleinrichtungen, wobei diese Baugruppen vorteilhaft an dem verfahrbaren Teil 10 der Krananlage 1 montiert sind, der die einzelnen Zylinder A bis D von einer zur nächsten Bearbeitungsstation befördert. Erfindungsgemäß wird auf die manuelle Eingabe der Zylinderdaten vollständig verzichtet; diese werden vielmehr automatisch über bestimmte, mit dem Kranumsetzerverbundene Einrichtungen bewerkstelligt, woraus sich dann nicht nur die Stellbefehle für die Kranpositionierung und Kranverstellung, sondern auch die oben erwähnten arbeitsspezifischen Parameter bestimmen lassen.

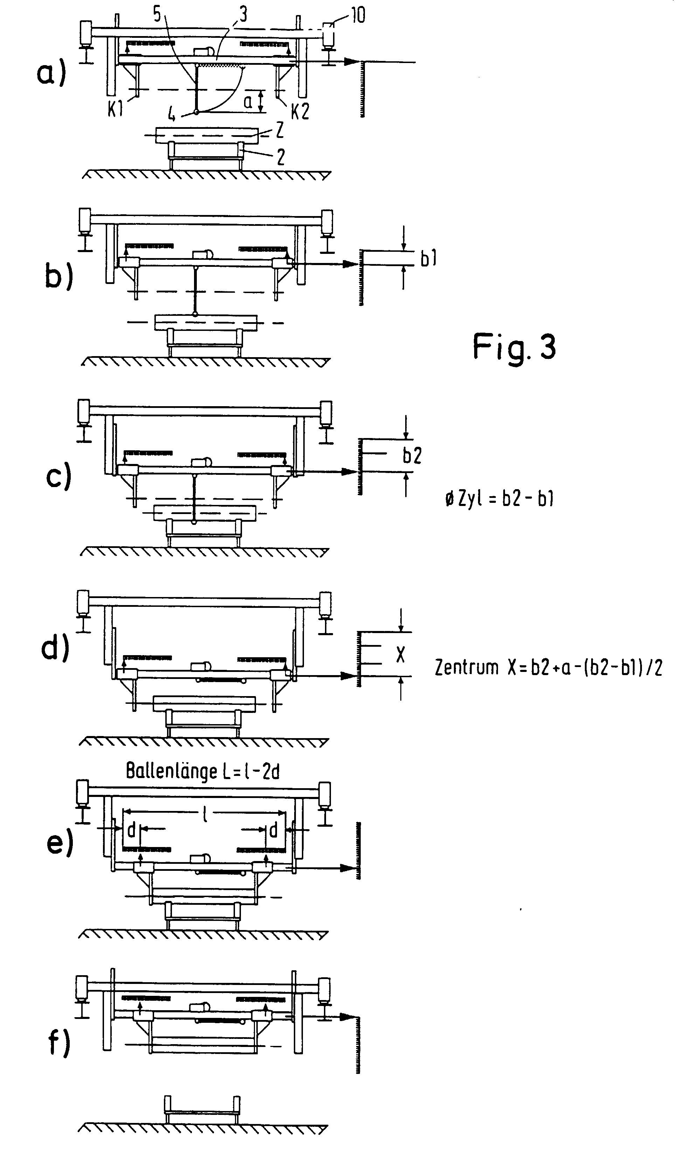

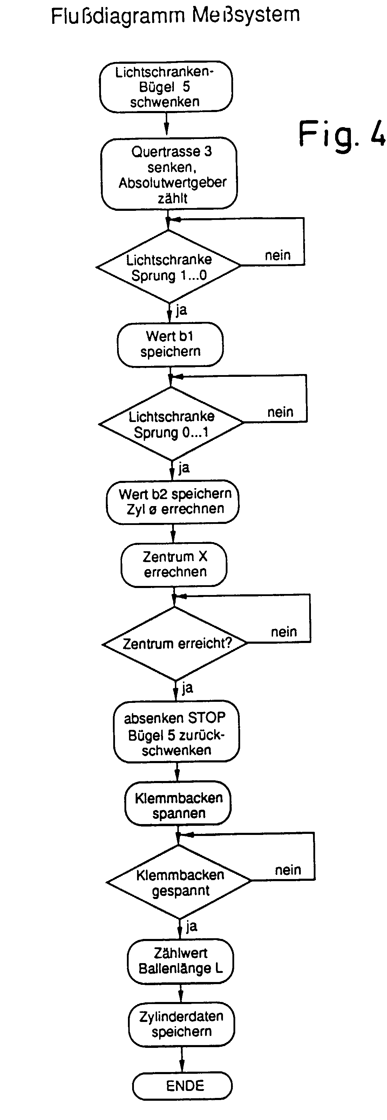

Wie die schematische Darstellung der Fig. 2 erkennen läßt, verfügt die Portalkrananlage 1, 10 über eine vertikal verfahrbare Quertrasse 3, an der einerseits zwei in Richtung der Quertrasse 3 durch Stellmotore definiert verschiebbare Klemmbacken K1, K2 und andererseits eine Lichtschrankenvorrichtung befestigt sind. Die eigentliche Lichtschranke 4 mit Sender- und Empfängerelement ist am freien Ende eines von der Horizontale in die Vertikale schwenkbaren Bügels 5 befestigt, wobei der Abstand der beiden Bügelschenkel und damit derAbstand von Sende- und Empfangselement der Lichtschranke 4 größer gewählt ist, als es dem größten zu erwartenden Durchmesser der zu vermessenden Druckzylinder A bis D entspricht. Wie die rechte Darstellung der Fig. 2 erkennen läßt, ist der Schwenkbügel 5 an einer Haltevorrichtung 6 befestigt, die sowohl auf der Quertrasse 3 innerhalb gewisser Grenzen als auch quer dazu verschieblich ist. Ein auf einer Prismenauflage 2 vorgelegter Druckzylinder Z, im dargestellten Beispiel ein Hohlzylinder soll in seinen Abmessungen automatisch bestimmt werden, was nachfolgend mit Bezug auf die Fig. 3 und 4 als Funktionsablauf erläutert wird. Die in Fig. 3 dargestellten Vertikal- und Horizontalskalen sind nur symbolisch als inkremental durch Wegstreckenzähler erfaßbare Streckenabschnitte zu verstehen.

Der Hohlzylinder Z ist auf der Prismenauflage 2 eines Ablagebocks unterhalb der Kranbahn In definierter Position vorgelegt. Der verfahrbare Teil 10 der Krananlage 1 mit Quertrasse 3 wird in die Position der Prismenauflage 2 bewegt, und die Klemmbacken K1, K2 befinden sich in ihrer äußeren Endposition.

Vor Beginn des Ablaufs der Zylindervermessung wird die Lichtschranke 4 über den Schwenkbügel 5 nach unten geklappt (Fig. 3(a)), wobei gleichzeitig die Lichtschranke 4 über die elektronische Steuerung aktiviert wird. Der Vertikalabstand a zwischen der Verbindungslinie der Klemmbacken K1 und K2 und der Lichtstrecke der Lichtschranke 4 ist bekannt und vorgespeichert. Dabei ist die vertikale Position der Lichtschranke 4 so gewählt, daß der senkrechte Abstand a zwischen der Lichtschranke 4 und der in der Fig. 3(a) angedeuteten Zentralverbindungslinie zwischen den Klemmbacken K1 und K2 mindestens dem halben, größten zu erwartenden Zylinderdurchmesser entspricht. Die Quertrasse der Krananlage 1 wird jetzt vertikal abgesenkt, wobei gleichzeitig die abgesenkte Wegstrecke über einen elektronischen Absolutwegaufnehmer (Absolutwertgeber) gemessen und in einer ersten Zähleinrichtung aufaddiert wird.

Beim Absenken der Quertrasse 3 oder Kranbrücke um die Strecke b1 (Fig. 3(b)) wird die Lichtschranke 4 durch den Zylinder Z unterbrochen. Durch das damit ausgelöste Unterbrechungssignal beginnt in der elektronischen Steuerung ein zweiter Zähler in Abhängigkeit des ersten (Vertikal-)Zählers zu laufen. Diese Zwischenzählung wird unterbrochen, sobald die Lichtschranke bei Erreichen der unteren Horizontaltangente an den Mantel des Zylinders Z nach zurückgelegter Wegstrecke b2 wieder freigegeben wird. Die Relation zwischen dem (zweiten) Zählwert b2, also der Zwischenzählung der vertikalen Zählung sowie dem (ersten) Zählwert b1 der Durchmesserzählung, gibt zum einen den tatsächlichen Zylinderdurchmesser (Fig. 3(c)) und zum zweiten die tatsächliche Position der Zylinderachse. Damit ist für die Dateneingabe zunächst der Durchmesser X bekannt sowie unter Berücksichtung des gespeichertenAbstandswerts a die aktuelle Achsposition des Zylinders Z, um so die Quertrasse 3 exakt auf die Achslinie des Zylinders Z positionieren zu können (Fig. 3(d)).

Anschließend werden die Kranbacken K1, K2 symmetrisch zueinander axial verfahren, bis sie den Zylinder Z erreichen und diesen mit definiertem Anpreßdruck einspannen (Fig. 3(e)). Ausgehend von der äußeren Position der Klemmbacken K1, K2, tritt beginnend mit der Fahrbewegung der Klemmbacken K1 und K2 ein weiterer inkrementaler Wegstreckenzähler (nicht dargestellt) in Aktion, der die Strecke d erfaßt, bis die Klemmposition erreicht ist. Aus dem Zählwert d wird im Zentralprozessor die Ballenlänge L des Zylinders Z errechnet. Eventuell vorhande Aufnahmeteile müssen bei der Zählung (Berechnung) der Ballenlänge L selbstverständlich abgezogen werden. Entsprechende Vorgabewerte sind vorgespeichert.

Nach dem kraftgesteuerten Abschalten der Verstellung der Klemmbacken K1, K2 wird der Zylinder Z angehoben (Fig. 3(f)), in die obere Position gebracht und anschließend über die erste Bearbeitungsstation der Galvanikanlage transportiert. Gleichzeitig mit dem Transport In die erste Bearbeitungsstation werden die ermittelten Zylinderdaten an alle übrigen Bearbeitungsstationen übergeben, um die arbeitsspezifischen Parameter festzulegen.

## Patentansprüche

1. Verfahren zum automatischen Bestimmen der geometrischen Abmessungen von einem Bearbeitungsprozess zuzuführenden Druckzylindern (A bis D, Z), **dadurch gekennzeichnet**, daß
- ausgehend von einer festgelegten Vertikalposition über einem auf einer positionsgenau definierten Vorlage horizontal gelagerten Druckzylinder (Z) eine vertikal verfahrbare Lichtschranke (4) so abgesenkt wird, daß die Lichtstrecke der Lichtschranke (4) durch den vorgelegten Druckzylinder (Z) unterbrochen und anschließend bei Erreichen der unteren Horizontaltangente an den Zylindermantel wieder freigegeben wird,
- die abgesenkte Wegstrecke der Lichtschranke (4) als aufaddierter erster Zählwert bis zum Augenblick der Wiederfreigabe der Lichtschranke (4) erfaßt wird,
- die Wegstrecke der Lichtschrankenunterbrechung durch den Druckzylinder (Z) als zweiter Zählwert erfaßt wird,
- aus der Relation von erstem zu zweitem Zählwert der Durchmesser des Druckzylinders (Z) und die tatsächliche Position der Zylinderachse bestimmt werden,
- zwei in Zylinderachsrichtung einander gegenüberstehende Klemmbacken (K1,K2) einer Aufnahmevorrichtung für den Druckzylinder in die festgestellte Position der Zylinderachse gebracht und von festgelegten axialen Ausgangspositionen bis zum Einspannen des Druckzylinders (Z) axial verfahren werden, wobei der axiale Verschiebeweg der Klemmbacken (K1,K2) als dritter Zählwert erfaßt und daraus die Ballenlänge des Druckzylinders (Z) bestimmt wird,
- die erfaßten Druckzylinderabmessungen in die Zentralsteuerung einer entsprechenden Bearbeitungsmaschine bzw. einer Automatikstraße eingegeben werden.

2. Einrichtung zum automatischen Bestimmen der geometrischen Abmessungen von einem Bearbeitungsprozeß zuzuführenden Druckzylindern, die mittels einer gesteuerten Krananlage (1,10) zu mindestens einer Bearbeitungsstation transportiert werden, **gekennzeichnet durch**
- eine an der Krananlage (1) befestigte, vertikal verfahrbare Lichtschranke (4,5) mit einem gegenseitigem Abstand von Lichtsende- und -empfangselement, der größer ist als der größte vorkommende Zylinderdurchmesser,
- einen elektronischen Absolutwegaufnehmer, der den vertikalen Verschiebeweg der Lichtschranke (4,5) bei deren Absenken, ausgehend von einer festgelegten oberen Startposition oberhalb eines auf einer Vorlage (2) mit bekannter Position vorgelegten Druckzylinders (Z) bis zum Erreichen einer Endposition unterhalb des die Lichtschrankenstrecke unterbrechenden Druckzylinders (Z) als ersten aufaddierten Zählwert erfaßt,
- einen zweiten Zähler, der, getriggert durch die vertikal verschiebbare Lichtschranke (4,5), bei deren Unterbrechung durch den Druckzylinder (Z) und deren Wiederfreigabe bei Erreichen der unteren Horizontaltangente an den Druckzylindermantel, den Durchmesser des Druckzylinders (Z) als Zwischenzählwert erfaßt,
- einen Prozessor, der aus der Relation von erstem Zählwert und Zwischenzählwert die Lage der Druckzylinderachse errechnet und einen Steuerbefehl für die auf die Zylinderachse ausgerichtete Positionierung von zwei mit der Krananlage (1,10) verbundenen, horizontal gegeneinander verfahrbaren Klemmbacken (K1,K2) bereitstellt,
- einen Wegstreckenzähler, der den horizontalen Verschiebeweg der Klemmbacken (K1,K2) von einer festgelegten Ausgangsposition aus bis zum Erreichen einer definierten Einspannung des Druckzylinders zwischen den beiden Klemmbacken (K1,K2) als dritten Zählwert erfaßt, woraus im Prozessor die Ballenlänge des Druckzylinders (Z) errechnet wird, und durch
- einen Anschluß an die Zentralsteuerung einer entsprechenden Bearbeitungsmaschine bzw. einer Automatikstraße, der die ermittelten Zylinderabmessungen überträgt.

3. Einrichtung nach Anspruch 2, **dadurch gekennzeichnet**, daß die Lichtschranke (4,5) und die Klemmbacken (K1,K2) an einer vertikal verfahrbaren Quertrasse (3) der Krananlage (1,10) befestigt sind.

4. Einrichtung nach Anspruch 3, **dadurch gekennzeichnet**, daß die Lichtschranke (4,5) an den freien, einander gegenüberstehenden Enden eines an der Quertrasse (3) befestigten Schwenkbügels (5) angebracht ist.

5. Einrichtung nach Anspruch 4, **dadurch gekennzeichnet**, daß der Schwenkbügel (5) an einer auf der Quertrasse (3) längs- und/oder quer verschieblichen Haltevorrichtung (6) befestigt ist.

## Claims

1. A method for the automatic determination of the geometrical measurements of printing cylinders (A to D, Z) to be introduced to a production process, **characterized in that**
- departing from a defined vertical position above a printing cylinder (Z), which is horizontally carried in a carriage having an exactly defined position, a vertically movable light barrier (4) is lowered in such a manner that the light path of the light barrier (4) is interrupted by the printing cylinder (Z) displayed and is subsequently released again to the cylinder jacket when reaching the lower horizontal tangent,
- the distance travelled by the light barrier (4) in descent is registered as a first counting data added up to the moment of release of the light barrier (4),
- the distance of the light barrier interruption caused by the printing cylinder (Z) is registered as a second counting data,
- the diameter of the printing cylinder (Z) and the actual position of the cylinder axis are determined by the relation of the first to the second counting data,
- two clamping jaws (K1, K2) facing each other in the direction of the cylinder axis, of a receptacle device for the printing cylinder are brought into the determined position of the cylinder axis and are axially moved from predetermined axial departure positions to the clamping of the printing cylinder (Z), whereby the distance which the clamping jaws (K1, K2) were shifted axially is registered as a third counting data from which the surface length of the printing cylinder (Z) is determined,
- the registered measurements of the printing cylinder are input to a central control unit of a respective manufacturing machine and an automatic train, respectively.

2. A device for the automatic determination of the geometrical measurements of printing cylinders to be introduced to a production process, which are transported by a controlled crane facility (1, 10) to at least one work station, **characterized by**
- a vertically movable light barrier (4, 5) mounted on to the crane facility (1), with a reciprocal distance of the light emission element and the light reception element, which is larger than the largest occuring cylinder diameter,
- an electronical absolute distance pick-up, which registers the distance of vertical shifting of the light barrier (4, 5) during its descent, departing from a predetermined upper starting position above a printing cylinder (Z) disposed on a carriage (2) with known position until arrival at a final position below the printing cylinder (Z), which interrupts the path of the light barrier as a first added up counting data,
- a second counter which, triggered by the vertically shiftable light barrier (4, 5) upon its interruption by the printing cylinder (Z) and its release upon the arrival of the lower horizontal tangent at the printing cylinder jacket, registers the diameter of the printing cylinder (Z) as an intermediate counting data,
- a processor which calculates the position of the printing cylinder axis from the relation of the first counting data and the intermediate counting data and provides a control command for the positioning of two clamping jaws (K1, K2), which are connected to the crane facility (1, 10) and horizontally movable towards one another, in alignment with the cylinder axis,
- a travelled distance counter, which registers as a third counting data the distance of the horizontal shifting of the clamping jaws (K1, K2) from a predetermined starting position to the achievement of a defined clamping of the printing cylinder between the two clamping jaws (K1, K2), from which the surface length of the printing cylinder (Z) is calculated in the processor, and by
- a connection to the central control unit of a respective processing machine and an automatic train, respectively, which transmits the determined measurements of the cylinder.

3. The device according to claim 2, **characterized in that** the light barrier (4, 5) and the clamping jaws (K1, K2) are mounted on to a vertically movable transversal path (3) of the crane facility (1, 10).

4. The device according to claim 3, **characterized in that** the light barrier (4, 5) is provided on the loose ends, which face one another, ofa swivelling bow (5) attached to the transversal path (3).

5. The device according to claim 4, **characterized in that** the swivelling bow (5) is mounted on to a holding device (6), which is shiftable longitudinally and/or transversely on the transversal path (3).

## Revendications

1. Procédé pour la détermination automatique des dimensions géométriques de cylindres d'impression (A à D, Z) devant être amenés à un processus de traitement, caractérisé en c e que
- en partant d'une position verticale définie, au-dessus d'un cylindre d'impression (Z) reposant horizontalement sur un support défini positionné avec précision, une barrière photoélectrique (4) mobile dans le sens vertical est abaissée de telle façon que le faisceau lumineux de la barrière photoélectrique (4) est interrompu par le cylindre d'impression (Z) interposé, puis libéré à nouveau dès qu'il atteint la tangente horizontale inférieure au corps du cylindre,
- la distance de descente de la barrière photoélectrique (4) est déterminée comme première valeur de comptage cumulée jusqu'à libération de la barrière photoélectrique (4),
- la distance de l'interruption de la barrière photoélectrique par le cylindre d'impression (Z) est déterminée comme seconde valeur de comptage,
- le diamètre du cylindre d'impression (Z) et la position effective de l'axe du cylindre sont déterminés à partir de la relation entre les première et seconde valeurs de comptage,
- deux mâchoires de serrage (K1, K2) d'un dispositif de réception pour le cylindre d'imprimerie, opposées dans la direction de l'axe du cylindre, sont amenées dans la position fixe de l'axe du cylindre et déplacées axialement, à partir de positions axiales définies, jusqu'au serrage du cylindre d'impression (Z), le déplacement axial des mâchoires de serrage (K1, K2) étant détecté comme troisième valeur de comptage à partir de laquelle on détermine la longueur de table du cylindre d'impression (Z),
- les dimensions détectées du cylindre d'impression sont entrées dans la commande centralisée d'une machine de traitement et respectivement d'une chaîne automatique.

2. Dispositif pour la détermination automatique des dimensions géométriques de cylindres d'impression devant être amenés à un processus de traitement, qui sont transportés au moyen d'un système de grue (1, 10) vers au moins une station de traitement, caractérisé en ce qu'il comprend
- une barrière photoélectrique (4, 5) mobile dans le sens vertical et fixée sur le système de grue (1), avec un élément émetteur de lumière et un élément récepteur de lumière disposés l'un de l'autre à une distance supérieure au plus grand diamètre de cylindre rencontré,
- un capteur de déplacement absolu électronique qui, lors de l'abaissement de la barrière photoélectrique (4, 5) à partir d'une position de démarrage supérieure fixe au-dessus d'un cylindre d'impression (Z) reposant sur un support (2) dont la position est connue, jusqu'à l'atteinte d'une position finale en dessous du cylindre d'impression (Z) interrompant le faisceau lumineux de la barrière photoélectrique, détecte le déplacement vertical de la barrière photoélectrique comme première valeur de comptage cumulée,
- un second compteur qui, déclenché par la barrière photoélectrique (4, 5) déplaçable dans le sens vertical détermine, lors de l'interruption du faisceau lumineux de ladite barrière photoélectrique par le cylindre d'impression (Z), puis lors de la libération dudit faisceau au moment d'atteindre la tangente horizontale inférieure au corps du cylindre, le diamètre du cylindre d'impression (Z) comme valeur de comptage intermédiaire,
- un processeur qui, à partir de la relation entre la première valeur de comptage et la valeur de comptage intermédiaire, calcule la position de l'axe du cylindre d'impression et délivre une instruction de commande pour le positionnement sur l'axe du cylindre de deux mâchoires de serrage (K1, K2) couplées avec l'installation de grue (1, 10) et déplaçables horizontalement l'une par rapport à l'autre,
- un compteur de distances qui détermine le déplacement horizontal des mâchoires de serrage (K1, K2) à partir d'une position de départ fixe jusqu'à l'atteinte d'une fixation définie du cylindre d'impression entre les deux mâchoires de serrage (K1, K2), comme troisième valeur de comptage à partir de laquelle la longueur de table du cylindre d'impression (Z) est calculée dans le processeur, et
- une connexion avec la commande centralisée d'une machine de traitement et respectivement d'une chaîne de traitement adéquates, qui transmet les dimensions déterminées du cylindre.

3. Dispositif selon la revendication 2, caractérisé en ce que la barrière photoélectrique (4, 5) et les mâchoires de serrage (K1, K2) sont fixées sur une traverse (3) de l'installation de grue (1, 10) déplaçable dans le sens vertical.

4. Dispositif selon la revendication 3, caractérisé en ce que la barrière photoélectrique (4, 5) est montée aux extrémités libres opposées d'un étrier pivotant (5) fixé sur la traverse (3).

5. Dispositif selon la revendication 4, caractérisé en ce que l'étrier pivotant (5) est monté sur un dispositif de fixation (6) qui peut être déplacé longitudinalement et/ou transversalement sur la traverse (3).
